# FASCICULE DE BREVET EUROPEEN

(11) **EP 1 138 885 B1**
(45) Date de publication et mention de la délivrance du brevet: **17.06.2009**
(21) Numéro de dépôt: 01400757.9
(22) Date de dépôt: 23.03.2001
(51) Int. Cl.: F01L 9/04, F02D 13/02, F01L 13/08

(54) **Procédé de commande d'un moteur à combustion en vue de faciliter le démarrage**
Verfahren zur Kontrolle einer Brennkraftmaschine zur Erleichterung des Startes
Method for controlling an internal combustion engine for easing the start

(30) Priorité: 30.03.2000 FR 0004026
(43) Date de publication de la demande: 04.10.2001
(73) Titulaire: RENAULT S.A.S., 92100 Boulogne Billancourt (FR)
(72) Inventeur: Desjardins, Georges, 92500 Rueil Malmaison (FR); Dewaele, Gilles, 78400 Chatou (FR); Cohen, Josy, 94420 Le Plessis Trevise (FR); Keretli, Fahri, 78320 Le Mesnil St.-Denis (FR)

(56) Documents cités:
- PATENT ABSTRACTS OF JAPAN vol. 1999, no. 08, 30 juin 1999 (1999-06-30) & JP 11 082076 A (NISSAN MOTOR CO LTD), 26 mars 1999 (1999-03-26)
- PATENT ABSTRACTS OF JAPAN vol. 2000, no. 05, 14 septembre 2000 (2000-09-14) & JP 2000 064861 A (TOYOTA MOTOR CORP), 29 février 2000 (2000-02-29)

## Description

La présente invention concerne un moteur à combustion, notamment un moteur thermique de véhicule automobile.

L'invention concerne en particulier les moteurs qui disposent d'une commande totalement indépendante des soupapes.

L'invention s'applique à un procédé de commande d'un moteur à combustion à quatre temps, en vue de faciliter le démarrage du moteur, du type comportant un vilebrequin, un circuit d'admission d'air ou de mélange air/carburant et un circuit d'échappement de gaz brûlés qui communiquent avec une chambre de combustion d'au moins un cylindre du moteur, du type dans lequel les communications des circuits d'admission et d'échappement avec la chambre sont susceptibles d'être obturées chacune par au moins une soupape, respectivement d'admission et, respectivement, d'échappement, et du type dans lequel un piston décrit un mouvement de va-et-vient dans le cylindre comprenant une course descendante du piston du point mort haut vers le point mort bas et une course ascendante du piston du point mort bas vers le point mort haut.

Un tel procédé de démarrage est décrit dans le document JP-A-2001159353.

Au cours d'un arrêt du moteur, en particulier lorsque le moteur est très chaud, les gaz brûlés contenus dans la ligne d'échappement, qui sont plus légers et plus chauds que⁻ l'air, remontent dans les canalisations du moteur, et notamment dans le circuit d'admission.

On constate souvent l'apparition de ce phénomène sur un moteur à distribution traditionnelle, c'est à dire dans lequel les soupapes sont commandées par des arbres à cames, car l'arrêt du moteur s'effectue souvent au voisinage des points morts de la course des pistons et les gaz brûlés profitent de l'ouverture simultanée des soupapes d'admission et d'échappement sur certains cylindres pour remplir toutes les tubulures d'admission du moteur.

La présence de gaz brûlés dans les circuits d'admission pénalise alors fortement le démarrage suivant du moteur puisque la combustion du carburant injecté ne trouve plus suffisamment d'oxygène pour se développer correctement.

Lors de l'arrêt d'un moteur dont les soupapes sont commandées individuellement de manière indépendante, notamment par des actionneurs électromagnétiques, les soupapes sont le plus souvent positionnées à mi-course pour tous les cylindres.

Par conséquent, la communication entre les tubulures d'échappement et les tubulures d'admission est encore plus directe que pour un moteur à distribution traditionnelle, ce qui amplifie le phénomène « d'envahissement » du circuit d'admission par les gaz brûlés et aggrave les dysfonctionnements lors du démarrage.

Par ailleurs, le développement de nouvelles générations de machines électriques qui combinent la fonction alternateur et la fonction démarreur, avec des puissances beaucoup plus élevées que celles des machines actuelles implantées dans les véhicules particuliers, provoque l'apparition de nouveaux modes de fonctionnement du véhicule.

Un nouveau mode de fonctionnement dit « stop & start », qui est basé sur la coupure du moteur à l'arrêt du véhicule, presente un potentiel important de réduction de la consommation et des émissions.

Cependant, notamment pour des raisons de sécurité et de réduction de la consommation, ce mode de fonctionnement nécessite des redémarrages automatiques rapides et à consommation optimisée.

Les modes de redémarrage actuels ne permettent pas de répondre à ces contraintes, notamment en raison d'une stratégie de pilotage des soupapes qui ne favorise pas la diminution du couple résistant du moteur lors de la rotation du vilebrequin sous l'action du démarreur.

L'invention vise à remédier aux inconvénients précités.

Dans ce but l'invention propose un procédé de commande du type décrit précédemment, caractérisé en ce que, lorsque le démarrage du moteur a été demandé et pendant les premiers tours du vilebrequin sous l'action d'un démarreur, on commande le fonctionnement d'au moins un cylindre dans un mode dit de purge, en commandant successivement :
- au voisinage du point mort haut, la fermeture des soupapes d'échappement et l'ouverture d'au moins une soupape d'admission ;
- au voisinage du point mort bas, la fermeture des soupapes d'admission et l'ouverture d'au moins une soupape d'échappement, de manière à transvaser vers le circuit d'échappement au moins une partie des gaz brûlés qui ont rempli le circuit d'admission pendant l'arrêt du moteur.

Grâce au procédé selon l'invention les dysfonctionnements liés à la présence de gaz d'échappement dans le circuit d'admission peuvent être totalement supprimés.

Le procédé selon l'invention permet aussi de réduire le couple résistant du moteur durant le démarrage grâce à une stratégie de pilotage des soupapes qui élimine les phases de compression.

La réduction du couple résistant du moteur permet notamment de réduire la puissance électrique absorbée par le système d'entraînement du moteur et donc la puissance fournie par l'accumulateur électrique associé.

On peut donc optimiser le dimensionnement des éléments participant au démarrage et réduire la consommation électrique imputable aux multiples redémarrages du moteur lorsqu'il fonctionne dans le mode « stop & start ».

Selon d'autres caractéristiques de l'invention :
- lorsque le démarrage du moteur a été demandé et avant de lancer le démarreur, on détermine, en fonction de paramètres de fonctionnement du moteur, s'il est souhaitable ou nécessaire de commander le fonctionnement d'au moins un cylindre dans le mode de purge ;
- le mode de purge est utilisé uniquement après au moins un essai infructueux de démarrage sans mode de purge ;
- le mode de purge est utilisé comme mode de défaillance, lorsque les chances de démarrage sans mode de purge sont sensiblement nulles ;
- on commande systématiquement le fonctionnement d'au moins un cylindre dans le mode de purge ;
- on quitte le mode de purge après un nombre déterminé de tours de vilebrequin ;
- ledit nombre de tours de vilebrequin est calculé, ou cartographié, en fonction de paramètres de fonctionnement du moteur ;
- ledit nombre de tours de vilebrequin est calculé, ou cartographié, en fonction de la durée prévue de la phase de démarrage et/ou en fonction de la durée prévue pendant laquelle la probabilité de démarrage est très faible ;
- on quitte le mode de purge après qu'un capteur ait constaté l'absence de gaz brûlés dans le circuit d'admission ou dans la chambre de combustion ;
- on quitte le mode de purge après que le vilebrequin ait atteint une vitesse de rotation déterminée ;
- pour un procédé de commande d'un moteur, du type dans lequel le circuit d'admission comporte au moins un volet d'admission, ou papillon des gaz, avant de commander le fonctionnement d'un cylindre dans le mode de purge, on ouvre au moins partiellement le volet d'admission ;
- pour les cylindres ne fonctionnant pas dans le mode de purge, on commande leur fonctionnement dans un mode dit neutre dans lequel ils ont au moins une soupape ouverte ;
- pour les cylindres ne fonctionnant pas dans le mode de purge, on commande progressivement, avant la fin du fonctionnement dans le mode de purge, leur fonctionnement dans le mode normal à quatre temps, c'est à dire en synchronisant leurs soupapes de manière adéquate et en démarrant l'admission et la compression du mélange carburé ;
- avant de commander le fonctionnement d'un cylindre dans le mode de purge, on détermine la position angulaire du vilebrequin en vue de synchroniser les instants d'ouverture et de fermeture des soupapes d'au moins un cylindre avec les points morts haut et bas du piston correspondant ;
- pour un procédé du type dans lequel l'ouverture et la fermeture de chaque soupape sont commandées par un actionneur, notamment par un actionneur électromagnétique, relié à une unité électronique de commande, avant de déterminer la position angulaire du vilebrequin, on place les soupapes dans une position soit ouverte au maximum soit fermée ;
- après le fonctionnement dans le mode de purge et avant de reprendre un fonctionnement dans le mode normal à quatre temps avec admission de carburant, on commande le fonctionnement d'au moins un cylindre dans un mode dit de dépressurisation qui est similaire au mode de purge mais au cours duquel on ferme le volet d'admission et on avance l'instant de fermeture de la soupape d'admission, en vue de diminuer la densité de l'air dans le circuit d'admission ;
- après le fonctionnement dans le mode de purge on détermine, en fonction de paramètres de fonctionnement du moteur, s'il est nécessaire de commander le fonctionnement d'au moins un cylindre dans le mode de dépressurisation ;
- on quitte le mode de dépressurisation après un nombre déterminé de tours de vilebrequin ;
- ledit nombre de tours de vilebrequin dans le mode de dépressurisation est calculé, ou cartographié, en fonction de paramètres de fonctionnement du moteur ;
- on quitte le mode de dépressurisation après qu'un capteur ait déterminé une dépression suffisante dans le circuit d'admission ;
- on quitte le mode de dépressurisation après que le vilebrequin ait atteint une vitesse de rotation déterminée.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique partielle en coupe d'une partie d'un moteur à combustion interne à soupapes sans arbres à cames et commandé selon un procédé conforme aux enseignements de l'invention ;
- la figure 2 est un schéma qui illustre un cycle de commande des soupapes du cylindre dans le mode de purge ;
- la figure 3 est un schéma qui illustre un cycle de commande des soupapes du cylindre dans le mode de dépressurisation.

Dans la description qui va suivre on considère à titre non limitatif que chaque cylindre possède une seule soupape d'admission et une seule soupape d'échappement commandées individuellement par des actionneurs électromagnétiques.

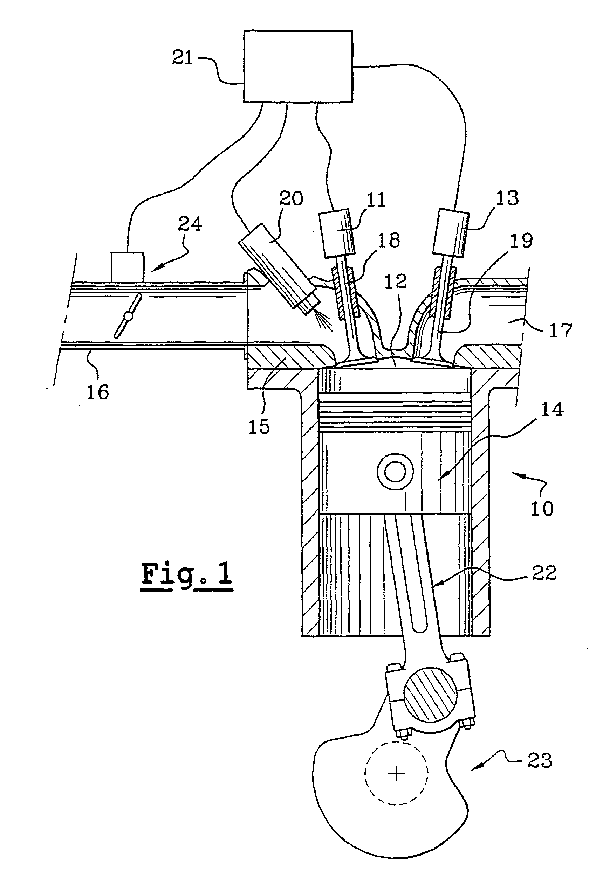

On a représenté à la figure 1 un cylindre 10 d'un moteur à combustion interne à quatre temps dont la partie supérieure forme une chambre de combustion 12 délimitée par un piston mobile 14 et par une culasse 15.

Dans la partie inférieure du cylindre, une bielle 22 relie le piston 14 à un vilebrequin 23.

Le cylindre 10 est alimenté en mélange air/carburant par un circuit d'admission 16 qui débouche dans la chambre de combustion 12 au travers d'une soupape d'admission 18 dont les déplacements sont commandés par un actionneur électromagnétique linéaire 11 afin d'obturer ou non la communication entre le circuit d'admission 16 et la chambre de combustion 12.

Un circuit d'échappement 17 est prévu pour l'évacuation des gaz brûlés hors de la chambre de combustion 12 au travers d'une soupape d'échappement 19 également commandée par un actionneur linéaire électromagnétique 13.

La commande des soupapes d'admission 18 et d'échappement 19 est assurée par une unité électronique de commande 21 qui pilote les actionneurs 11, 13.

L'unité électronique 21 commande aussi un volet d'admission 24, l'injection de carburant, ici indirecte, au moyen d'un injecteur 20, ainsi que l'allumage au moyen d'une bougie (non représentée).

L'unité électronique de commande 21 comporte notamment des moyens de mémorisation d'une ou plusieurs cartographies de fonctionnement du moteur.

L'unité électronique de commande 21 reçoit des signaux représentatifs de paramètres de fonctionnement tels que le régime du moteur, la pression atmosphérique, la pression dans chaque cylindre, le débit des gaz d'admission et/ou d'échappement, le couple instantané fourni, etc.

Selon le principe du cycle à quatre temps d'un moteur à combustion, celui-ci s'effectue en deux rotations du vilebrequin 23 et en quatre courses du piston 14, les quatre temps du cycle étant l'admission, la compression, la combustion et l'échappement.

De manière connue, lorsque le moteur est à l'arrêt, il est nécessaire de mettre en place une phase dite de démarrage classique avant de pouvoir mettre en place le cycle à quatre temps.

Pendant cette phase de démarrage classique on provoque la rotation du vilebrequin 23 à l'aide d'un démarreur (non représenté) qui est alimenté en courant électrique par la batterie du moteur.

Pendant la rotation du vilebrequin 23 on identifie sa position angulaire, par exemple au moyen d'un capteur et de repères angulaires solidaires en rotation du vilebrequin 23.

La connaissance de la position angulaire du vilebrequin 23 permet de déterminer les points morts PMH, PMB de la course des pistons 14, et ainsi de synchroniser les instants d'ouverture et de fermeture des soupapes 18, 19 en fonction du cycle prévu de fonctionnement.

Lorsque le vilebrequin 23 a atteint une vitesse suffisante, on alimente les cylindres 10 en carburant puis on provoque l'allumage afin de déclencher la combustion du mélange carburé, ce qui constitue le début d'un cycle à quatre temps.

Le procédé selon l'invention vise notamment à mettre en place un mode dit de purge Mₚ, pendant la rotation du vilebrequin 23 sous l'action du démarreur et avant la première combustion dans un cylindre 10, en vue de faciliter le démarrage.

On expliquera maintenant le fonctionnement d'un cylindre 10 dans le mode de purge Mₚ.

Le principe du fonctionnement dans le mode de purge Mₚ consiste à utiliser la rotation « à vide », donc sans injection de carburant, du vilebrequin 23, en commandant les soupapes 18, 19 du cylindre 10 de manière adéquate, pour purger le circuit d'admission 16 des gaz brûlés qu'il contient, en les évacuant vers le circuit d'échappement 17.

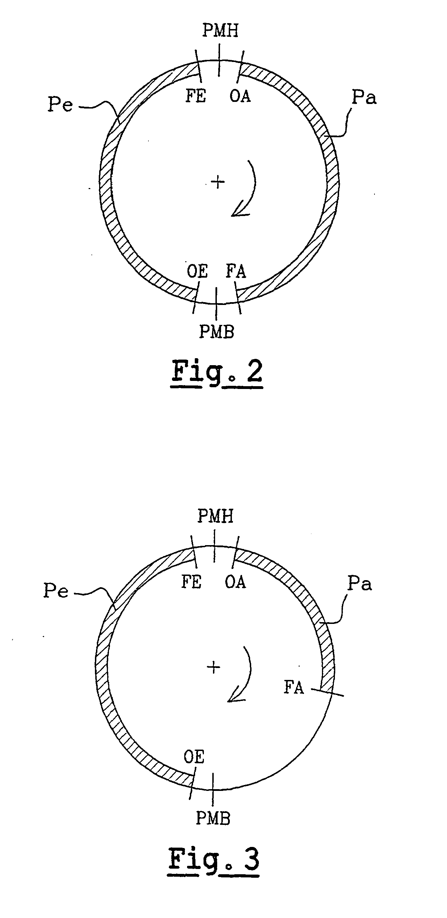

Le mode de purge Mₚ fonctionne selon un cycle à deux phases qui est illustré sur la figure 2.

Ce cycle à deux phases comprend une phase d'admission Pa des gaz brûlés lors de la course descendante du piston 14 depuis le point mort haut PMH jusqu'au point mort bas PMB.

La phase d'admission Pa est bornée par l'ouverture de la soupape d'admission 18 au voisinage du point mort haut PMH et sa fermeture au voisinage du point mort bas PMB.

Le cylindre 10 se remplit donc avec des gaz brûlés qui sont initialement contenus dans le circuit d'admission 16.

La deuxième phase est une phase d'évacuation Pe des gaz brûlés qui a lieu lors de la course ascendante du piston 14 depuis le point mort bas PMB jusqu'au point mort haut PMB.

La phase d'évacuation Pe est bornée par l'ouverture OE de la soupape d'échappement 19 au voisinage du point mort bas PMB, après la fermeture FA de la soupape d'admission 18, et la fermeture FE de la soupape d'échappement 19 au voisinage du point mort haut PMH, avant l'ouverture OA de la soupape d'admission 18.

Le cylindre 10 vidange donc les gaz brûlés qu'il contient dans le circuit d'échappement 17.

Lors du deuxième passage au point mort haut PMH, et donc après un tour complet de vilebrequin 23, on a vidangé depuis le circuit d'admission 16 vers le circuit d'échappement 17 une quantité de gaz brûlés sensiblement égale au volume du cylindre 10.

On note que le passage des points morts PMB, PMH se fait avec toutes les soupapes 18, 19 fermées de manière qu'il n'y ait jamais communication directe entre les circuits d'admission 16 et d'échappement 17.

Avantageusement, la succession des fermetures FA, FE et des ouvertures OA, OE de soupapes 18, 19 est réalisée le plus rapidement possible compte tenu des possibilités techniques du système de pilotage des soupapes 18, 19 et du système qui leur fournit l'énergie, par exemple la batterie.

On note que les passages aux points morts PMB, PMH sont détectés par des moyens connus, par exemple au moyen de cibles angulaires graduées solidaires en rotation du vilebrequin 23.

On peut enchaîner plusieurs cycles de fonctionnement dans le mode de purge Mₚ.

On remarque que le fonctionnement dans le mode de purge Mp contribue à réduire le couple résistant du moteur pendant la phase de démarrage puisque le piston 14 ne rencontre pratiquement pas de force résistante, que ce soit pendant la course descendante, ou lors de la course ascendante.

On constate notamment que le mode de purge Mp ne comporte pas de phase de compression.

Dans le cas d'un moteur à plusieurs soupapes d'admission 18 et/ou plusieurs soupapes d'échappement 19 par cylindre 10, on peut fonctionner dans le mode de purge Mₚ en utilisant une seule soupape d'admission 18 et une seule soupape d'échappement 19, les autres soupapes restant fermées en permanence.

Ce type de fonctionnement permet notamment de diminuer la consommation d'énergie nécessaire à l'ouverture et la fermeture des soupapes 18, 19.

On peut aussi fonctionner dans la mode de purge en fermant et en ouvrant simultanément toutes les soupapes d'un même type, admission ou échappement.

On expliquera maintenant le fonctionnement d'un mode préféré de réalisation du procédé selon l'invention appliqué, à titre d'exemple, à un moteur à quatre cylindres C1, C2, C3, C4.

On commence par détecter la demande de démarrage du moteur, par exemple en détectant l'utilisation d'une clé de contact ou d'un moyen équivalent.

On détermine alors, en fonction de paramètres de fonctionnement du moteur, s'il est nécessaire de commander le fonctionnement d'au moins un cylindre C1, C2, C3, C4 dans le mode de purge Mₚ.

On peut prévoir aussi que systématiquement au moins un cylindre C1, C2, C3, C4 fonctionne dans le mode de purge Mₚ en phase de démarrage.

Les paramètres de fonctionnement du moteur comportent par exemple la durée de l'arrêt du moteur, l'intensité de fonctionnement du moteur avant l'arrêt, les conditions climatiques, le nombre de tentatives infructueuses de démarrage.

De préférence, les paramètres de fonctionnement doivent permettre de déterminer la probabilité de réussir un démarrage sans le recours au mode de purge Mₚ. Plus cette probabilité est faible, plus le fonctionnement dans le mode de purge Mₚ doit être intense et efficace.

Si cette probabilité est très faible, on peut décider de faire fonctionner tous les cylindres C1, C2, C3, C4 dans le mode de purge Mₚ.

Le bilan de la consommation électrique des actionneurs des soupapes des cylindres C1, C2, C3, C4 est un autre paramètre qui peut permettre de décider du nombre de cylindres à faire fonctionner dans le mode de purge Mₚ.

En effet, le fonctionnement d'un cylindre C1, C2, C3, C4 dans le mode de purge Mₚ nécessite des ouvertures et des fermetures de soupapes 18, 19 successives qui consomment une quantité importante d'énergie électrique.

Si l'on souhaite diminuer la consommation de courant, on peut limiter le nombre de cylindres C1, C2, C3, C4 qui fonctionnent dans le mode de purge Mₚ.

On suppose ici que l'on choisit le premier cylindre C1 pour fonctionner dans le mode de purge Mₚ.

On commande le fonctionnement des autres cylindres C2, C3, C4 dans un mode dit neutre Mₙ dans lequel chaque cylindre C2, C3, C4 a au moins une soupape 18, 19 ouverte.

Lorsqu'un cylindre C2, C3, C4 fonctionne dans le mode neutre Mₙ, il ne participe pas à la purge du circuit d'admission 16 et il ne produit pas d'effort résistant à l'encontre de la rotation du vilebrequin 23.

Pour le cylindre C1, choisi pour fonctionner dans le mode de purge Mₚ, on place les soupapes 18, 19 dans une position soit ouverte au maximum, soit fermée.

Cette opération est nécessaire car généralement, après l'arrêt d'un moteur dont les soupapes 18, 19 sont commandées par des actionneurs électromagnétiques 11, 13, les soupapes 18, 19 sont restées positionnées à mi-course entre une position fermée et une position ouverte au maximum.

Les soupapes 18, 19 étant commandées ici par des actionneurs linéaires électromagnétiques 11, 13, on effectue une opération dite de « collage » des soupapes 18, 19 en déclenchant l'alimentation en courant électrique des actionneurs 11, 13, de manière à placer les soupapes 18, 19 dans une position ouverte au maximum.

Avantageusement, on effectue aussi le collage des soupapes 18, 19 des autres cylindres C2, C3, C4 dans une position ouverte au maximum.

De préférence, on échelonne le collage des soupapes 18, 19 de manière à ne pas faire coïncider les appels de courant associés.

La position ouverte au maximum des soupapes 18, 19 est préférable à la position fermée car elle permet d'éviter, pendant la rotation du vilebrequin 23, des phases de compression ou de dépression dans les cylindres C1, C2, C3, C4 susceptibles de freiner la rotation du vilebrequin 23.

On commande ensuite la mise en action du démarreur qui entraîne le vilebrequin 23 en rotation.

Lorsque le vilebrequin 23 tourne, on identifie sa position angulaire.

Si le circuit d'admission 16 est équipé d'un volet d'admission 24, ou papillon des gaz, dont on commande l'ouverture de manière à éviter la mise en dépression du circuit d'admission 16 pendant le fonctionnement dans le mode de purge Mₚ.

En effet, comme le fonctionnement dans le mode de purge Mₚ produit une aspiration des gaz contenus dans le circuit d'admission 16, si ce dernier est obturé par un volet 24 le cylindre C1, C2, C3, C4 tend à faire le vide dans le circuit d'admission 16, ce qui ralentit le piston 14 pendant sa course descendante et consomme une énergie importante.

Cette consommation d'énergie freinerait la rotation du vilebrequin 23 c'est à dire qu'elle augmenterait le couple résistant du moteur.

On note que l'ouverture du volet d'admission 24 peut précéder, accompagner ou suivre la mise en rotation du démarreur.

Comme on a identifié la position angulaire du vilebrequin 23, on est en mesure de synchroniser les instants d'ouverture et de fermeture des soupapes 18, 19 avec les points morts hauts PMH et bas PMB.

Avantageusement, on commence par synchroniser les soupapes 18, 19 du cylindre C1 choisi pour fonctionner dans le mode de purge Mₚ, ce qui permet de commencer le fonctionnement dans le mode de purge Mₚ sans attendre la synchronisation des soupapes 18, 19 de tous les cylindres C2, C3, C4.

On commande donc le fonctionnement du premier cylindre C1 choisi dans le mode de purge Mₚ, en commençant par une phase d'admission Pₐ de gaz brûlés.

Pendant le fonctionnement dans le mode de purge Mₚ on effectue progressivement la synchronisation des soupapes 18, 19 des cylindres neutres C2, C3, C4.

On quitte le fonctionnement dans le mode de purge Mₚ après un nombre déterminé de tours de vilebrequin 23 qui est calculé, ou cartographié.

L'unité électronique 21 détermine ce nombre de tours de vilebrequin 23 en fonction de paramètres de fonctionnement du moteur.

Ces paramètres peuvent être les mêmes que ceux qui sont utilisés pour déterminer le nombre de cylindres C1, C2, C3, C4 à faire fonctionner dans le mode de purge Mₚ.

L'unité électronique 21 peut utiliser des paramètres supplémentaires tels que la vitesse de rotation du vilebrequin 23, la quantité de gaz brûlés contenus dans le circuit d'admission 16 et/ou dans la chambre de combustion 12 des cylindres C1, C2, C3, C4, qui sont mesurées par des capteurs (non représentés).

Avantageusement, lorsque l'unité électronique 21 détermine la fin du fonctionnement dans le mode de purge Mp, elle commande la fermeture du volet d'admission 24 si il était ouvert.

Cependant, les gaz brûlés qui ont été vidangés vers le circuit d'échappement 17 ont été remplacés dans le circuit d'admission 16 par de l'air sensiblement à la pression atmosphérique.

Or, au démarrage du moteur, lorsque l'on commence à alimenter les cylindres C1, C2, C3, C4 en carburant, on risque d'admettre une quantité d'air trop importante par rapport à la quantité de carburant injectée ou par rapport au couple qu'il il sera nécessaire de fournir.

Le piston 14 n'ayant pas une énergie cinétique suffisamment importante, il aura alors des difficultés pour comprimer le mélange carburé, ce qui pourrait conduire au « noyage » du moteur dans le cas où l'allumage ne pourrait avoir lieu.

Si l'allumage a eu lieu, l'énergie fournie par la combustion est trop forte par rapport à la vitesse de rotation initiale du moteur, ce qui nécessite une réaction rapide de l'unité électronique 21, notamment en diminuant le débit d'air.

C'est pourquoi l'unité électronique 21 détermine, en fonction de paramètres de fonctionnement du moteur, s'il est nécessaire de commander le fonctionnement d'au moins un cylindre C1, C2, C3, C4 dans un mode dit de dépressurisation M_{d}.

Le mode de dépressurisation M_{d} vise à réduire la densité de l'air dans le circuit d'admission 16 pour faciliter le démarrage du moteur.

Le mode de dépressurisation M_{d} vidange l'air contenu dans le circuit d'admission 16 vers le circuit d'échappement 17.

Le fonctionnement dans le mode de dépressurisation M_{d} est similaire au fonctionnement dans le mode de purge Mₚ mais il s'en distingue par la fermeture du volet d'admission 24 et par l'avancement de l'instant de fermeture FA de la soupape d'admission 18.

Les paramètres de fonctionnement qui permettent de déterminer la mise en place du mode de dépressurisation M_{d} peuvent être identiques à ceux utilisés dans le cadre du mode de purge Mₚ.

On suppose ici que l'on commande le fonctionnement du premier cylindre C1 dans le mode de dépressurisation M_{d}, tandis que les autres cylindres C2, C3, C4 continuent de fonctionner dans le mode neutre Mₙ.

La figure 3 illustre le fonctionnement d'un cylindre C1 dans le mode de dépressurisation M_{d}.

Par rapport au mode de purge Mₚ, la phase d'admission Pa est plus courte de manière à diminuer la consommation d'énergie due à la mise en dépression du circuit d'admission 16.

La phase d'évacuation Pe est similaire à celle du mode de purge Mₚ.

On note que l'instant de fermeture FA de la soupape d'admission 18 peut être cartographié en vue d'optimiser la consommation d'énergie par rapport à l'efficacité de la dépressurisation.

On quitte le mode de dépressurisation M_{d} après un nombre de tours de vilebrequin 23 qui est calculé, ou cartographié, en fonction de paramètres de fonctionnement du moteur.

Ces paramètres de fonctionnement comportent par exemple les mêmes informations que les paramètres utilisés dans le cadre du mode de purge Mₚ, ainsi que la mesure de la pression dans le circuit d'admission 16.

Lorsque l'on quitte le mode de dépressurisation M_{d}, on commande le fonctionnement de tous les cylindres C1, C2, C3, C4 dans le mode normal à quatre temps.

L'unité électronique 21 synchronise alors pour chaque cylindre C1, C2, C3, C4 les instants d'ouverture et de fermeture des soupapes 18, 19, l'alimentation en carburant et l'allumage par rapport aux points morts PMH, PMB de la course du piston 14 de manière que le moteur fonctionne de manière classique selon un cycle à quatre temps.

De préférence, avant la fin du fonctionnement dans le mode de dépressurisation M_{d}, on commence un fonctionnement classique à quatre temps pour les cylindres C2, C3, C4 qui étaient neutres, c'est à dire qu'on alimente ces cylindres C2, C3, C4 en carburant et on comprime le mélange.

Avantageusement, on déclenche le premier allumage, pour un moteur à allumage commandé, sur un cylindre neutre C2, C3, C4 dès que l'on quitte le mode de dépressurisation M_{d} pour le premier cylindre C1.

Dès que l'on déclenche l'allumage pour un cylindre C1, C2, C3, C4, tous les autres doivent être prêts à fonctionner selon le cycle à quatre temps.

On note que, si l'on a décidé de ne pas utiliser le mode de dépressurisation M_{d}, on peut commencer à fonctionner selon le cycle à quatre temps pour les cylindres neutres C2, C3, C4 avant la fin du mode de purge Mₚ.

On note aussi que les modes de purge Mp et de dépressurisation M_{d} ne sont pas des modes de fonctionnement à durée prolongée.

Le volume total maximal des gaz brûlés contenus dans les circuits d'admission 16 n'excède pas quelques cylindrées du moteur. Par conséquent, si l'on a calibré le mode de purge Mₚ à son maximum d'efficacité, c'est à dire pour une vidange d'une cylindrée de gaz brûlés par tour, sa durée sera limitée à quelques tours du vilebrequin, c'est à dire au maximum à quelques secondes ou fractions de secondes.

De plus, le procédé selon l'invention permet d'intégrer le fonctionnement dans le mode de purge Mₚ et dans le mode de dépressurisation M_{d} en temps masqué dans la logique de redémarrage du moteur, de manière que la fiabilité des démarrages soit améliorée sans pénaliser la durée du démarrage.

En effet, les opérations de préparation au démarrage telles que la synchronisation des soupapes 18, 19, et l'alimentation en carburant, sont effectuées parallèlement au fonctionnement selon le procédé de l'invention.

Selon une variante de réalisation (non représentée) de l'invention, si le moteur est du type traditionnel c'est à dire que les soupapes sont commandées par un ou plusieurs arbres à cames, on utilisera le mode de purge Mₚ uniquement comme mode de défaillance, en l'adaptant éventuellement au fonctionnement dans le cycle à quatre temps.

En effet, sur un moteur traditionnel, le fonctionnement dans le mode de purge Mₚ nécessite l'utilisation d'un dispositif de distribution variable qui ne permet pas une commande individuelle des soupapes aussi souple que sur un moteur sans arbre à came.

Par conséquent, la mise en place systématique d'un mode de purge Mₚ ne se justifie pas, notamment en raison du surcoût que cela provoquerait et de la pénalisation des temps de démarrage.

Sur ce type de moteur, on met alors en place le mode de purge Mₚ uniquement comme mode de défaillance, c'est à dire lorsque les chances de démarrage sans mode de purge sont à peu près nulles.

Par exemple, l'unité électronique 21 peut déterminer que les chances de démarrage sont sensiblement nulles lorsque l'on a déjà effectué un nombre déterminé de tentatives de démarrage.

On peut rencontrer ce type de situation par exemple lors d'un arrêt prolongé du moteur, après une période de fonctionnement intense prolongée.

Pour un mode de purge Mₚ utilisé comme mode de défaillance, on favorise l'efficacité de la purge au détriment du temps de démarrage qui augmente.

## Revendications

1. Procédé de commande d'un moteur à combustion à quatre temps, en vue de faciliter le démarrage du moteur, du type comportant un vilebrequin (23), un circuit d'admission d'air (16) ou de mélange air/carburant et un circuit d'échappement (17) de gaz brûlés qui communiquent avec une chambre de combustion (12) d'au moins un cylindre (10) du moteur, du type dans lequel les communications des circuits d'admission (16) et d'échappement (17) avec la chambre (12) sont susceptibles d'être obturées chacune par au moins une soupape, respectivement d'admission (18) et, respectivement, d'échappement (19), et du type dans lequel un piston (14) décrit un mouvement de va-et-vient dans le cylindre (10) comprenant une course descendante du piston (14) du point mort haut (PMH) vers le point mort bas (PMB) et une course ascendante du piston (14) du point mort bas (PMB) vers le point mort haut (PMH),
**caractérisé en ce que,** lorsque le démarrage du moteur a été demandé et pendant les premiers tours du vilebrequin (23) sous l'action d'un démarreur, on commande le fonctionnement d'au moins un cylindre (C1) dans un mode dit de purge (Mₚ), en commandant successivement :
- au voisinage du point mort haut (PMH), la fermeture (FE) des soupapes d'échappement (19) et l'ouverture (OA) d'au moins une soupape d'admission (18) ;
- au voisinage du point mort bas (PMB), la fermeture (FA) des soupapes d'admission (18) et l'ouverture (OE) d'au moins une soupape d'échappement (19), de manière à transvaser vers le circuit d'échappement (17) au moins une partie des gaz brûlés qui ont rempli le circuit d'admission (16) pendant l'arrêt du moteur.

2. Procédé selon la revendication précédente, **caractérisé en ce que,** lorsque le démarrage du moteur a été demandé et avant de lancer le démarreur, on détermine, en fonction de paramètres de fonctionnement du moteur, s'il est souhaitable ou nécessaire de commander le fonctionnement d'au moins un cylindre (C1) dans le mode de purge (Mₚ).

3. Procédé selon la revendication 1, **caractérisé en ce que** le mode de purge (Mₚ) est utilisé uniquement après au moins un essai infructueux de démarrage sans mode de purge (Mₚ).

4. Procédé selon la revendication précédente, **caractérisé en ce que** le mode de purge (Mₚ) est utilisé comme mode de défaillance, lorsque les chances de démarrage sans mode de purge (Mₚ) sont sensiblement nulles.

5. Procédé selon la revendication 1, **caractérisé en ce qu'**on commande systématiquement le fonctionnement d'au moins un cylindre (C1) dans le mode de purge (Mₚ).

6. Procédé selon l'une quelconque des revendications précédentes, **caractérisé en ce que** l'on quitte le mode de purge (Mₚ) après un nombre déterminé de tours de vilebrequin (23).

7. Procédé selon la revendication précédente, **caractérisé en ce que** ledit nombre de tours de vilebrequin (23) est calculé, ou cartographié, en fonction de paramètres de fonctionnement du moteur.

8. Procédé selon la revendication 6, **caractérisé en ce que** ledit nombre de tours de vilebrequin (23) est calculé, ou cartographié, en fonction de la durée prévue de la phase de démarrage et/ou en fonction de la durée prévue pendant laquelle la probabilité de démarrage est très faible.

9. Procédé selon l'une quelconque des revendications précédentes, **caractérisé en ce que** l'on quitte le mode de purge (Mₚ) après qu'un capteur ait constaté l'absence de gaz brûlés dans le circuit d'admission (16) ou dans la chambre de combustion (12).

10. Procédé selon l'une quelconque des revendications précédentes, **caractérisé en ce que** l'on quitte le mode de purge (Mₚ) après que le vilebrequin (23) ait atteint une vitesse de rotation déterminée.

11. Procédé selon l'une quelconque des revendications précédentes, du type dans lequel le circuit d'admission (16) comporte au moins un volet d'admission (24), ou papillon des gaz, **caractérisé en ce que**, avant de commander le fonctionnement d'un cylindre (C1) dans le mode de purge (Mₚ), on ouvre au moins partiellement le volet d'admission (24).

12. Procédé selon l'une quelconque des revendications précédentes, **caractérisé en ce que,** pour les cylindres (C2, C3, C4) ne fonctionnant pas dans le mode de purge (Mₚ), on commande leur fonctionnement dans un mode dit neutre (Mₙ) dans lequel ils ont au moins une soupape (18, 19) ouverte.

13. Procédé selon l'une quelconque des revendications précédentes, **caractérisé en ce que,** pour les cylindres (C2, C3, C4) ne fonctionnant pas dans le mode de purge (Mₚ), on commande progressivement, avant la fin du fonctionnement dans le mode de purge (Mₚ), leur fonctionnement dans le mode normal à quatre temps, c'est à dire en synchronisant leurs soupapes (18, 19) de manière adéquate et en démarrant l'admission et la compression du mélange carburé.

14. Procédé selon l'une quelconque des revendications précédentes, **caractérisé en ce que,** avant de commander le fonctionnement d'un cylindre (C1) dans le mode de purge (Mₚ), on détermine la position angulaire du vilebrequin (23) en vue de synchroniser les instants d'ouverture et de fermeture des soupapes (18, 19) d'au moins un cylindre (C1, C2, C3, C4) avec les points morts haut (PMH) et bas (PMB) du piston (14) correspondant.

15. Procédé selon la revendication précédente, du type dans lequel l'ouverture et la fermeture de chaque soupape (18, 19) sont commandées par un actionneur (11, 13), notamment par un actionneur électromagnétique, relié à une unité électronique de commande (21), **caractérisé en ce que,** avant de déterminer la position angulaire du vilebrequin (23), on place les soupapes (18, 19) dans une position soit ouverte au maximum soit fermée.

16. Procédé selon l'une quelconque des revendications précédentes, **caractérisé en ce que,** après le fonctionnement dans le mode de purge (Mₚ) et avant de reprendre un fonctionnement dans le mode normal à quatre temps avec admission de carburant, on commande le fonctionnement d'au moins un cylindre (C1) dans un mode dit de dépressurisation (M_{d}) qui est similaire au mode de purge (Mₚ) mais au cours duquel on ferme le volet d'admission (24) et on avance l'instant de fermeture (FA) de la soupape d'admission (18), en vue de diminuer la densité de l'air dans le circuit d'admission (16).

17. Procédé selon la revendication précédente, **caractérisé en ce que**, après le fonctionnement dans le mode de purge (Mₚ) on détermine, en fonction de paramètres de fonctionnement du moteur, s'il est nécessaire de commander le fonctionnement d'au moins un cylindre (C1) dans le mode de dépressurisation (M_{d}).

18. Procédé selon l'une des revendications 16 ou 17, **caractérisé en ce que** l'on quitte le mode de dépressurisation (M_{d}) après un nombre déterminé de tours de vilebrequin (23).

19. Procédé selon la revendication précédente, **caractérisé en ce que** ledit nombre de tours de vilebrequin (23) dans le mode de dépressurisation (M_{d}) est calculé, ou cartographié, en fonction de paramètres de fonctionnement du moteur.

20. Procédé selon l'une quelconque des revendications 16 à 19, **caractérisé en ce que** l'on quitte le mode de dépressurisation (M_{d}) après qu'un capteur ait déterminé une dépression suffisante dans le circuit d'admission (16).

21. Procédé selon l'une quelconque des revendications 16 à 20, **caractérisé en ce que** l'on quitte le mode de dépressurisation (M_{d}) après que le vilebrequin (23) ait atteint une vitesse de rotation déterminée.

## Claims

1. Method of controlling a four-stroke combustion engine, with the aim of making it easier to start the engine, of the type comprising a crankshaft (23), an air or air/fuel mixture intake circuit (16) and an exhaust circuit (17) for exhausting burned gases, these circuits communicating with a combustion chamber (12) of at least one cylinder (10) of the engine, of the type in which the communications between the intake (16) and exhaust (17) circuits and the chamber (12) can each be shut off by at least one valve, namely an intake (18) and exhaust (19) valve, respectively, and of the type in which a piston (14) describes a reciprocating movement in the cylinder (10) that comprises a downstroke of the piston (14) from the top dead centre (TDC) to the bottom dead centre (BDC) and an upstroke of the piston (14) from the bottom dead centre (BDC) to the top dead centre (TDC), **characterized in that,** when engine start-up has been requested and during the first few revolutions of the crankshaft (23) under the action of a starter, at least one cylinder (C1) is caused to operate in a so-called purge mode (Mₚ) by successively controlling:
- in the vicinity of the top dead centre (TDC), the closure (EC) of the exhaust valves (19) and the opening (IO) of at least one intake valve (18);
- in the vicinity of the bottom dead centre (BDC), the closure (IC) of the intake valves (18) and the opening (EO) of at least one exhaust valve (19), so as to transfer to the exhaust circuit (17) at least some of the burned gases which have filled the intake circuit (16) while the engine is at a standstill.

2. Method according to the preceding claim, **characterized in that,** when engine start-up has been requested and before activating the starter, it is determined, as a function of engine operating parameters, whether it is desirable or necessary to operate at least one cylinder (C1) in the purge mode (Mₚ).

3. Method according to Claim 1, **characterized in that** the purge mode (Mₚ) is used only after at least one unsuccessful attempt at starting without purge mode (Mₚ).

4. Method according to the preceding claim, **characterized in that** the purge mode (Mₚ) is used as failure mode when the chances of starting without purge mode (Mₚ) are substantially zero.

5. Method according to Claim 1, **characterized in that** at least one cylinder (C1) is systematically operated in the purge mode (Mₚ).

6. Method according to any one of the preceding claims, **characterized in that** the purge mode (Mₚ) is exited after a predetermined number of revolutions of the crankshaft (23).

7. Method according to the preceding claim, **characterized in that** the said number of revolutions of the crankshaft (23) is calculated, or mapped, as a function of engine operating parameters.

8. Method according to Claim 6, **characterized in that** the said number of revolutions of the crankshaft (23) is calculated, or mapped, as a function of the intended duration of the starting phase and/or as a function of the intended duration during which the probability of starting is very low.

9. Method according to any one of the preceding claims, **characterized in that** the purge mode (Mₚ) is exited after a sensor has detected the absence of burned gases in the intake circuit (16) or in the combustion chamber (12).

10. Method according to any one of the preceding claims, **characterized in that** the purge mode (Mₚ) is exited after the crankshaft (23) has reached a predetermined speed of rotation.

11. Method according to any one of the preceding claims, of the type in which the intake circuit (16) comprises at least one gas inlet valve (24), or throttle valve, **characterized in that,** before operating a cylinder (C1) in the purge mode (Mₚ), the inlet valve (24) is at least partially opened.

12. Method according to any one of the preceding claims, **characterized in that**, in the case of the cylinders (C2, C3, C4) not operating in the purge mode (Mₚ), they are operated in a so-called neutral mode (Mₙ) in which they have at least one valve (18, 19) open.

13. Method according to any one of the preceding claims, **characterized in that,** in the case of the cylinders (C2, C3, C4) not operating in the purge mode (Mₚ), they are progressively operated, before the end of the operation in the purge mode (Mₚ), in the normal four-stroke mode, that is to say by synchronizing their valves (18, 19) in a suitable manner and by starting the intake and the compression of the carburetted mixture.

14. Method according to any one of the preceding claims, **characterized in that**, before operating a cylinder (C1) in the purge mode (Mₚ), the angular position of the crankshaft (23) is determined with the aim of synchronizing the instants of opening and closing of the valves (18, 19) of at least one cylinder (C1, C2, C3, C4) with the top dead centre (TDC) and bottom dead centre (BDC) of the corresponding piston (14).

15. Method according to the preceding claim, of the type in which the opening and closing of each valve (18, 19) is controlled by an actuator (11, 13), in particular by an electromagnetic actuator, connected to an electronic control unit (21), **characterized in that**, before determining the angular position of the crankshaft (23), the valves (18, 19) are placed in either a fully open position or in a closed position.

16. Method according to any one of the preceding claims, **characterized in that**, after the operation in the purge mode (Mₚ) and before resuming an operation in the normal four-stroke mode with the intake of fuel, at least one cylinder (C1) is caused to operate in a so-called depressurization mode (M_{d}) which is similar to the purge mode (Mₚ) but during which the inlet valve (24) is closed and the instant of closure (IC) of the intake valve (18) is advanced with the aim of reducing the density of the air in the intake circuit (16).

17. Method according to the preceding claim, **characterized in that**, after the operation in the purge mode (Mₚ), it is determined, as a function of engine operating parameters, whether it is necessary to operate at least one cylinder (C1) in the depressurization mode (M_{d}).

18. Method according to either of Claims 16 and 17, **characterized in that** the depressurization mode (M_{d}) is exited after a predetermined number of revolutions of the crankshaft (23).

19. Method according to the preceding claim, **characterized in that** the said number of revolutions of the crankshaft (23) in the depressurization mode (M_{d}) is calculated, or mapped, as a function of engine operating parameters.

20. Method according to any one of Claims 16 to 19, **characterized in that** the depressurization mode (M_{d}) is exited after a sensor has determined a sufficient depression in the intake circuit (16).

21. Method according to any one of Claims 16 to 20, **characterized in that** the depressurization mode (M_{d}) is exited after the crankshaft (23) has reached a predetermined speed of rotation.

## Patentansprüche

1. Verfahren zur Ansteuerung eines Viertaktverbrennungsmotors zur Erleichterung des Startens des Motors, der jener Art ist, die eine Kurbelwelle (23), einen Lufteinlasskreis (16) oder Kraftstoff-/Luft-Einlasskreis und einen Abgasauslasskreis (17), die mit einer Brennkammer (12) mindestens eines Motorzylinders (10) in Verbindung stehen, umfasst, jener Art, bei der die Verbindungen der Einlasskreise (16) und Auslasskreise (17) mit der Kammer (12) jeweils durch mindestens ein Einlassventil (18) bzw. Auslassventil (19) geschlossen werden können, und jener Art, bei der ein Kolben (14) eine Hin- und Herbewegung im Zylinder (10) durchführt, die einen Abwärtshub des Kolbens (14) vom oberen Totpunkt (OT) zum unteren Totpunkt (UT) und einen Aufwärtshub des Kolbens (14) vom unteren Totpunkt (UT) zum oberen Totpunkt (OT) umfasst,
**dadurch gekennzeichnet, dass** nach einer Anforderung des Startens des Motors und während der ersten Umdrehungen der Kurbelwelle (23) unter Wirkung eines Anlassers der Betrieb mindestens eines Zylinders (C1) in einem so genannten Spülmodus (M_{P}) angesteuert wird, indem nacheinander Folgendes angesteuert wird:
- in der Nähe des oberen Totpunkts (OT) das Schließen (FE) der Auslassventile (19) und das Öffnen (OA) mindestens eines Einlassventils (18) ;
- in der Nähe des unteren Totpunkts (UT) das Schließen (FA) der Einlassventile (18) und das Öffnen mindestens eines Auslassventils (19), um mindestens einen Teil der Abgase, die während des Anhalten des Motors den Einlasskreis (16) gefüllt haben, in den Auslasskreis (17) umzufüllen.

2. Verfahren nach dem vorhergehenden Anspruch, **dadurch gekennzeichnet, dass** nach einer Anforderung des Startens des Motors und vor Anlassen des Starters als Funktion von Betriebsparametern des Motors ermittelt wird, ob es wünschenswert oder erforderlich ist, den Betrieb mindestens eines Zylinders (C1) im Spülmodus (M_{P}) anzusteuern.

3. Verfahren nach Anspruch 1, **dadurch gekennzeichnet, dass** der Spülmodus (M_{P}) einzig nach mindestens einem fehlgeschlagenen Versuch des Startens ohne Spülmodus (M_{P}) verwendet wird.

4. Verfahren nach dem vorhergehenden Anspruch, **dadurch gekennzeichnet, dass** der Spülmodus (M_{P}) als Versagensmodus verwendet wird, wenn die Chancen für ein Anlassen ohne Spülmodus (M_{P}) etwa null sind.

5. Verfahren nach Anspruch 1, **dadurch gekennzeichnet, dass** der Betrieb mindestens eines Zylinders (C1) im Spülmodus (M_{P}) systematisch angesteuert wird.

6. Verfahren nach einem der vorhergehenden Ansprüche, **dadurch gekennzeichnet, dass** der Spülmodus (M_{P}) nach einer bestimmten Anzahl von Umdrehungen der Kurbelwelle (23) verlassen wird.

7. Verfahren nach dem vorhergehenden Anspruch, **dadurch gekennzeichnet, dass** die Anzahl von Umdrehungen der Kurbelwelle (23) als Funktion von Betriebsparametern des Motors berechnet oder in einem Kennfeld dargestellt wird.

8. Verfahren nach Anspruch 6, **dadurch gekennzeichnet, dass** die Anzahl von Umdrehungen der Kurbelwelle (23) als Funktion der vorgesehenen Dauer der Anlassphase und/oder als Funktion der vorgesehenen Dauer, während der die Anlasswahrscheinlichkeit sehr gering ist, berechnet oder in einem Kennfeld dargestellt wird.

9. Verfahren nach einem der vorhergehenden Ansprüche, **dadurch gekennzeichnet, dass** der Spülmodus (M_{P}) verlassen wird, nachdem ein Sensor das Fehlen von Abgas im Einlasskreis (16) oder in der Brennkammer (12) festgestellt hat.

10. Verfahren nach einem der vorhergehenden Ansprüche, **dadurch gekennzeichnet, dass** der Spülmodus (M_{P}) verlassen wird, nachdem die Kurbelwelle (23) eine bestimmte Drehgeschwindigkeit erreicht hat.

11. Verfahren nach einem der vorhergehenden Ansprüche, jener Art, bei der der Einlasskreis (16) mindestens eine Gaseinlassklappe (24) oder -drossel aufweist, **dadurch gekennzeichnet, dass** vor Ansteuerung des Betriebs eines Zylinders (C1) im Spülmodus (M_{P}) die Einlassklappe (24) zumindest teilweise geöffnet wird.

12. Verfahren nach einem der vorhergehenden Ansprüche, **dadurch gekennzeichnet, dass** für die Zylinder (C2, C3, C4), die im Spülmodus (M_{P}) nicht arbeiten, ihr Betrieb im so genannten neutralen Modus (Mₙ) angesteuert wird, in dem sie mindestens ein geöffnetes Ventil (18, 19) besitzen.

13. Verfahren nach einem der vorhergehenden Ansprüche, **dadurch gekennzeichnet, dass** für die Zylinder (C2, C3, C4), die im Spülmodus (Mₚ) nicht arbeiten, vor Ende des Betriebs im Spülmodus (Mₚ) ihr Betrieb im normalen Viertaktmodus, das heißt unter Synchronisation ihrer Ventile (18, 19) auf geeignete Weise und unter Beginn des Einlassens und der Verdichtung des verbrannten Gemisches, nach und nach angesteuert wird.

14. Verfahren nach einem der vorhergehenden Ansprüche, **dadurch gekennzeichnet, dass** vor Ansteuerung des Betriebs eines Zylinders (C1) im Spülmodus (M_{P}) die Winkelposition der Kurbelwelle (23) im Hinblick auf die Synchronisation der Öffnungs- und Schließmomente der Ventile (18, 19) mindestens eines Zylinders (C1, C2, C3, C4) mit den oberen Totpunkten (OT) und unteren Totpunkten (UT) des entsprechenden Kolbens (14) bestimmt wird.

15. Verfahren nach dem vorhergehenden Anspruch, jener Art, bei der das Öffnen und das Schließen jedes Ventils (18, 19) durch ein Stellglied (11, 13), insbesondere durch ein elektromagnetisches Stellglied, das mit einer elektronischen Steuereinheit (21) verbunden ist, angesteuert wird, **dadurch gekennzeichnet, dass** vor Bestimmung der Winkelposition der Kurbelwelle (23) die Ventile (18, 19) in einer entweder maximal geöffneten oder einer geschlossenen Position platziert werden.

16. Verfahren nach einem der vorhergehenden Ansprüche, **dadurch gekennzeichnet, dass** nach Betrieb im Spülmodus (M_{P}) und vor Wiederaufnahme eines Betriebs im normalen Viertaktmodus mit Einlass von Kraftstoff der Betrieb mindestens eines Zylinders (C1) in einem so genannten Druckabbaumodus (M_{d}) angesteuert wird, der dem Spülmodus (M_{P}) ähnelt, aber während dessen die Einlassklappe (24) geschlossen und der Schließmoment (FA) des Einlassventils (18) im Hinblick auf die Verringerung der Luftdichte im Einlasskreis (16) vorgestellt wird.

17. Verfahren nach dem vorhergehenden Anspruch, **dadurch gekennzeichnet, dass** nach Betrieb im Spülmodus (M_{P}) als Funktion von Betriebsparametern des Motors ermittelt wird, ob es erforderlich ist, den Betrieb mindestens eines Zylinders (C1) im Druckabbaumodus (M_{d}) anzusteuern.

18. Verfahren nach einem der Ansprüche 16 oder 17, **dadurch gekennzeichnet, dass** nach einer bestimmten Anzahl von Umdrehungen der Kurbelwelle (23) der Druckabbaumodus (M_{d}) verlassen wird.

19. Verfahren nach dem vorhergehenden Anspruch, **dadurch gekennzeichnet, dass** die Anzahl von Umdrehungen der Kurbelwelle (23) im Druckabbaumodus (M_{d}) als Funktion von Betriebsparametern des Motors berechnet oder in einem Kennfeld dargestellt wird.

20. Verfahren nach einem der Ansprüche 16 bis 19, **dadurch gekennzeichnet, dass** der Druckabbaumodus (M_{d}) verlassen wird, nachdem ein Sensor einen ausreichenden Druckabbau im Einlasskreis (16) festgestellt hat.

21. Verfahren nach einem der Ansprüche 16 bis 20, **dadurch gekennzeichnet, dass** dieser Druckabbaumodus (M_{d}) verlassen wird, nachdem die Kurbelwelle (23) eine bestimmte Drehgeschwindigkeit erreicht hat.
